# EUROPEAN PATENT APPLICATION

(11) **EP 2 811 442 A1**
(43) Date of publication of application: **10.12.2014**
(21) Application number: 14166491.2
(22) Date of filing: 30.04.2014
(51) Int. Cl.: G06Q 10/10

(54) **Information Processing System, Information Processing Apparatus and Information Processing Method**

(30) Priority: 05.06.2013 JP 2013118870
(71) Applicant: Ricoh Company, Ltd., Tokyo 143-8555 (JP)
(72) Inventor: Hayano, Hideaki, Tokyo, 143-8555, (JP); Ryuu, Bin, Tokyo, 143-8555, (JP)
(74) Representative: Schwabe - Sandmair - Marx

(57) **Abstract**

An information processing system includes one or more computers and executes a process flow that is configured by arbitrarily combining one or more process units. The information processing system includes: an acquisition part that acquires electronic mail having a predetermined destination mail address; an extraction part that extracts data contained in the electronic mail; and an output part that outputs the extracted data as a processing target of the process flow.

## Description

### BACKGROUND OF THE INVENTION

### 1. Field of the Invention

The present invention generally relates to an information processing system, an information processing apparatus and an information processing method.

### 2. Description of the Related Art

There is known, for example disclosed in Japanese Laid-Open Patent Application No. 2012-065006, a computer system that executes a previously set process flow or work flow on image data obtained by scanning a manuscript in an image forming apparatus and distributes an execution result to a predetermined destination of distribution.

In recent years, devices having a communication function and capable of inputting and saving image data are used such as a cellular phone, a smartphone, a tablet-type terminal device, etc. Those devices and personal computers (PC) are capable of receiving image data from other devices and saving the received image data. The aforementioned computer system can be improved in its convenience if image data saved in such a device can be easily input into the aforementioned computer system.

### SUMMARY OF THE INVENTION

There is provided according to an aspect of the present invention an information processing system that includes one or more computers and executes a process flow that is configured by arbitrarily combining one or more process units, the information processing system including: an acquisition part that acquires electronic mail having a predetermined destination mail address; an extraction part that extracts data contained in the electronic mail; and an output part that outputs the extracted data as a process target of the process flow.

There is provided according to another aspect of the present invention an information processing apparatus that includes one or more computers and executes a process flow that is configured by arbitrarily combining one or more process units, the information processing system including: an acquisition part that acquires electronic mail having a predetermined destination mail address; an extraction part that extracts data contained in the electronic mail; and an output part that outputs the extracted data as a process target of the process flow.

There is provided according to a further aspect of the present invention an information processing method performed by an information processing system that includes one or more computers and executes a process flow that is configured by arbitrarily combining one or more process units, the information processing method including: acquiring electronic mail having a predetermined destination mail address; extracting data contained in the electronic mail; and outputting the extracted data as a processing target of the process flow.

Other objects, features and advantages of the present invention will become more apparent from the following detailed description when read in conjunction with the accompanying drawings.

The objects and advantages of the invention will be realized and attained by means of the elements and combinations particularly pointed out in the claims.

It is to be understood that both the foregoing general description and the following detailed description are exemplary and explanatory and not restrictive of the invention.

### BRIEF DESCRIPTION OF THE DRAWINGS

FIG. 1 is a diagram illustrating a configuration of a distribution management system according to an embodiment of the present invention;
FIG. 2 is a diagram illustrating a hardware configuration of a distribution management server;
FIG. 3 is a diagram illustrating a functional configuration of the distribution management server;
FIG. 4 is a diagram illustrating a work flow;
FIG. 5 is a diagram illustrating a configuration of a job input part;
FIG. 6 is a diagram illustrating a functional configuration of a mail input plugin;
FIG. 7 is a flowchart of an execution request receiving process of a work flow by electronic mail;
FIG. 8 is an illustration indicating a configuration of a setting information storage part;
FIG. 9 is an illustration indicating a configuration of job information;
FIG. 10 is a flowchart of a control process of a work flow based on the job information; and
FIG. 11 is an illustration indicating another configuration of the setting information storage part.

### DETAILED DESCRIPTION OF THE PREFERRED EMBODIMENTS

A description will be given below, with reference to the drawings, of a distribution management system according to an embodiment of the present invention.

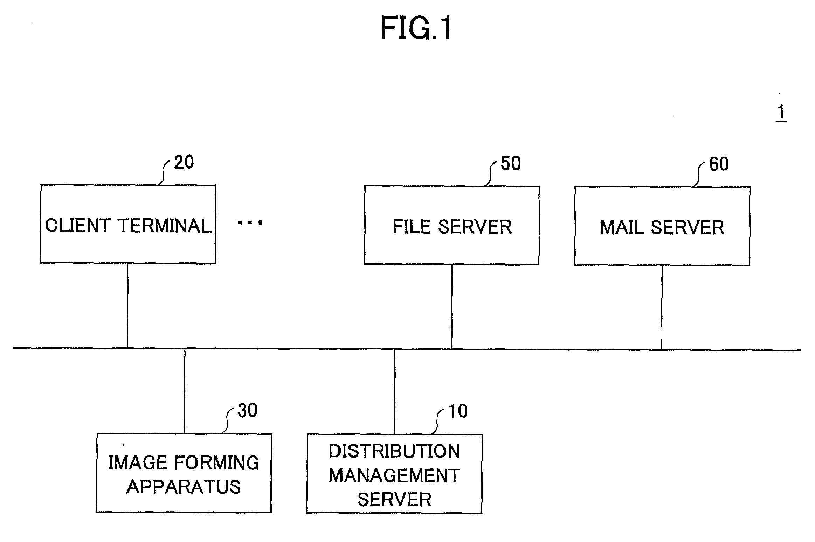

FIG. 1 is a diagram illustrating a configuration of a distribution management system according to an embodiment of the present invention. The distribution management system illustrated in FIG. 1 includes a distribution management server 10, one or more client terminals 20, one of more image forming apparatuses 30, a file server 50, a mail server 60, etc. Those apparatuses are communicably connected through a network such as a local area network (LAN) or the Internet. The communication connection can be either wired or wireless communication.

The client terminal 20 sends electronic mail containing data to a predetermined mail address (hereinafter, referred to as a "flow address". The data contained in the electronic mail is data input by the client terminal 20 itself or data received from other devices through the network communication. As an example of the client terminal 20, there are a cellular phone, smart phone, a tablet-type terminal, a personal computer (PC), etc.

The image forming apparatus 30 acquires image data by reading a manuscript, and sends the acquired image data to the distribution management server 10.

The distribution management server 10 is a computer that executes a previously set work flow on the image data acquired by the image forming apparatus 30 or data contained in electronic mail sent from the client terminal 20. The work flow refers to, for example, a flow of process (process flow) realized by an arbitrary combination of one or more process units (tasks) each of which realizes a complete function independently or singly. The process unit may be applied to an activity defined in general terms of work flow.

The file server 50 is a computer that accumulates and manages files shared on a network. The file server 50 is an example of a destination of distribution of an execution result of work flow that is executed by the distribution management server 10. If the file server 50 is a destination of distribution, the distributed data is stored in a folder of the file server 50.

The mail server 60 receives electronic mail having a destination of a flow address that is sent from the client terminal 20 through a communication protocol such as a simple mail transfer protocol (SMTP), and retains the received electronic mail therein. The mail server 60 returns the retained electric mail in response to an acquisition request of the electronic mail having a destination of a flow address. A communication protocol such as a post office protocol (POP) or an internet message access protocol (IMAP) may be used when acquiring electronic mail from the mail server 60. The mail server 60 may be set as a destination of distribution of an execution result of a work flow executed by the distribution management server 10. If the mail server 60 is a destination of distribution, the distributed data is attached to electronic mail, and is transferred to a destination of a mail address that is set in the executed work flow.

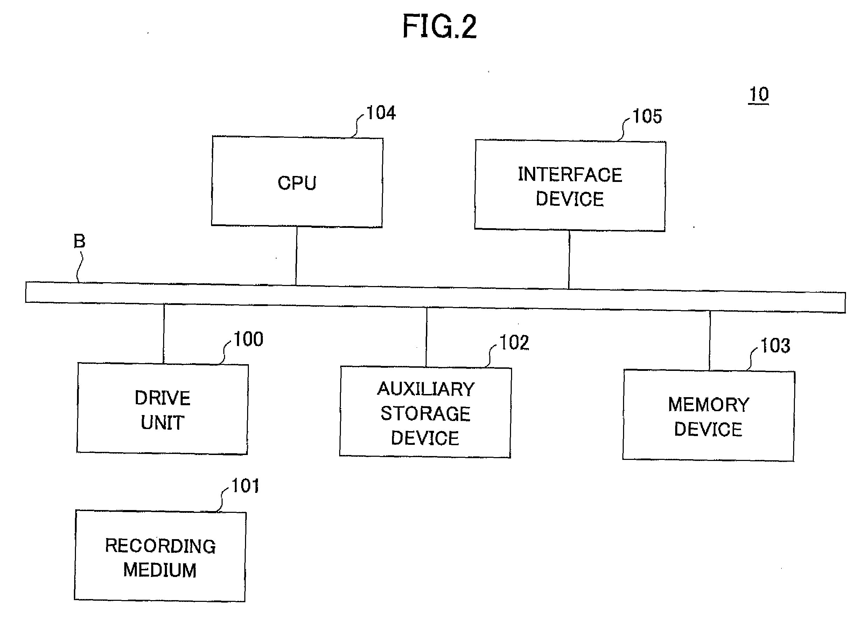

FIG. 2 is a diagram illustrating a hardware configuration of the distribution management server 10. As illustrated in FIG. 2, the distribution management server 10 includes a drive unit 100, an auxiliary storage device 102, a memory 103, a central processing unit (CPU) 104, an interface device 105, etc.

The program that realizes a process by the distribution management server 10 is provided by a recording medium 101 such as a CD-ROM or the like. When the recording medium 101 having a program recorded thereon is set in the drive unit 100, the program recorded on the recording medium 101 is installed in the auxiliary storage device 102 through the drive unit 100. The installation of the program is not necessarily performed by the recording medium 101, and the program may be downloaded from other computes through a network. The auxiliary storage device 102 stores the installed program, and also stores necessary files and data.

The memory device 103 reads the program from the auxiliary storage device 102 when an activation instruction of the program is received, and stores the read program therein. The CPU 104 executes a function associating with the distribution management server 10 according to the program stored in the memory device 103. The interface device 105 is used as an interface to establish a network connection.

The distribution management server 10 may be configured by a plurality of computers.

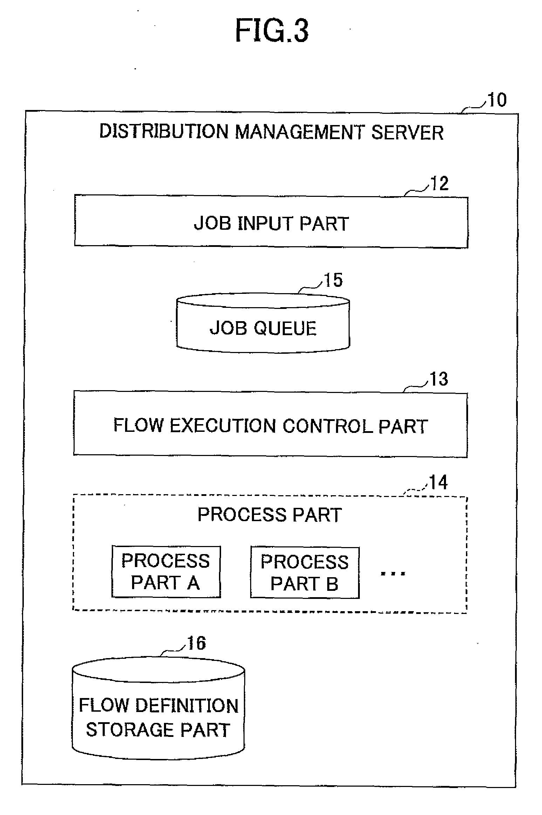

FIG. 3 is a diagram illustrating a functional configuration of the distribution management server 10. As illustrated in FIG. 3, the distribution management server 10 includes a job input part 12, a flow execution control part 13, a process part 14, etc. Each part is realized by programs installed in the distribution management server 10 being executed by the CPU 104. The distribution management server 10 uses storages such as a job queue 15, a flow definition storage part 16 and the like. Each storage can be realized by the auxiliary storage device 102 or a storage device connected to the distribution management server 10 through a network. The memory device 103 may be used as the job queue 15.

The flow definition storage part 16 stores flow definition data. The flow definition data refers to data in which definition information regarding a flow of a work flow process is recorded. In the present embodiment, one piece of flow definition data corresponds to one work flow. Accordingly, the flow definition data is created for each of work flows having mutually different procedures.

The job input part 12 inputs, in response to an execution request of a work flow, job information associating with the work flow concerned into the job queue 15. In the present embodiment, the job refers to an execution unit of work flow. For example, when the same work flow is executed for a plurality of times, the job executed in each time is different.

The job queue 15 stores the input job information therein. The job information is information containing, for example, an identifier of the work flow, which is an execution target, and data regarding a processing target.

The flow execution control part 13 acquires the job information from the job queue 15, and controls an execution of the work flow according to the definition by the flow definition data corresponding to the job information concerned.

The process part 14 performs a process for each process unit (activity) that configures the work flow. For example, one activity is realized by one process part 14. Accordingly, a work flow is realized by a connection of processes of one or more process parts 14 having mutually different process contents. A process part A, a process part B, ···•are illustrated as examples in FIG. 3. Each process part 14 may be realized by an independent program module. In such a case, each program module may be installed easily as plug-in.

The flow definition data will be described later in detail. In the present embodiment, one or more process units that configure a work flow are generally classified into an intermediated process or an output process. The intermediate process is, for example, a process performed on data that is set as a processing target of a work flow. As an example of the intermediate process, there are a noise removal process, an optical character recognition (OCR) process, a translation process, a data conversion process, etc.

The output process is a process of outputting data from a work flow. As an example of the output process, there is a process of distribution to a folder of the file server 50. The mail server 60 may be set as a destination of distribution.

Although the distribution is explained as an example of an output form in the present embodiment, for example, an output process according to other output forms may configure a work flow.

A definition regarding an ordered combination of at least one output process and one or more intermediate processes, if necessary, is recorded in the flow definition data. The work flow may be defined so that branched processes are executed concurrently.

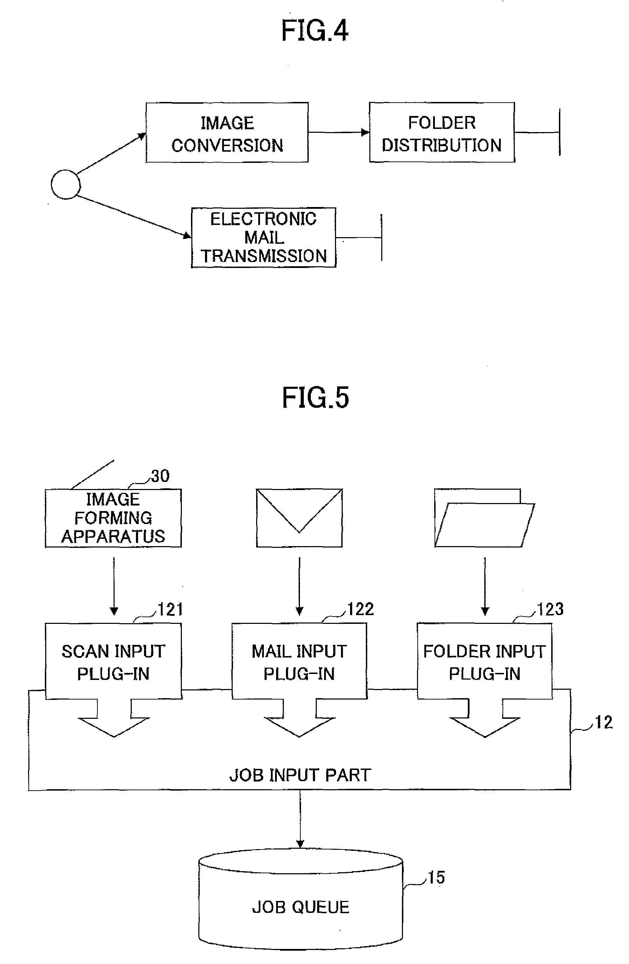

FIG. 4 is an illustration of an example of a work flow. In the work flow illustrated in FIG. 4, consequent to an image conversion process executed on image data, an image conversion process on the input image data and a distribution process of the image data converted into an image are executed in series, and a process of transmitting the input image data though electronic mail is executed concurrently. For example, a work flow definition illustrated in FIG. 4 is described together with an identifier (hereinafter, referred to as "flow ID") in the flow definition data.

A description will be given below of a detail of the job input part 12. FIG. 5 is a diagram illustrating a configuration of the job input part 12.

In the job input part 12, exchange of data with a data inputter is realized by a program capable of being plugged-in. FIG. 5 illustrates, as examples, a scan input plug-in 121, a mail input plug-in 122 and a folder input plug-in 123.

The scan input plug-in 121 is a plug-in for receiving an execution request of a work flow from the image forming apparatus 30. That is, the input plug-in 121 receives from the image forming apparatus 30 an execution request of a work flow with respect to image data obtained by scanning in the image forming apparatus 30. A flow ID and setting values with respect to the work flow are designated in the execution request together with the image data. The scan plug-in 121 shapes or reformulates the received flow ID, image data and setting values into job information according to a form pre-established or scheduled by the flow execution control part 13, and stores the shaped or converted job information in the job queue 15.

The mail input plug-in 122 is a plug-in for receiving an execution request of a work flow by electronic mail having a destination of a flow address. In this case, the data attached to the electronic mail concerned is set as a processing target of the work flow. The data may be image data or data of other types. The mail input plug-in 122 shapes or reformulates data attached to the electronic mail and information described in the electronic mail into job information according to a form reestablished or scheduled by the execution control part 13, and stores the job information in the job queue 15.

The folder input plug-in 123 is a plug-in for receiving an execution request of work flow by uploading of image data with respect to a predetermined folder. The predetermined folder may be a folder formed in the auxiliary storage device 102 of the distribution management server 10, or a folder formed in a storage device (for example, any one of client terminals 20 or a storage device of the file server 50) connected to the distribution management server 10 through a network. The folder input plug-in 123 poles a predetermined folder, and if there are image data and a file, which stores a flow ID and setting values, the folder input plug-in 123 acquires the data and file concerned. The folder input plug-in 123 shapes or reformulates the acquired image data and the file storing the flow ID and setting values into job information according to a form reestablished or scheduled by the flow execution control part 13, and stores the job information in the job queue 15.

As mentioned above, the job input part 12 can receive an execution request of a work flow by various forms. Additionally, an execution request may be received in other forms. For example, a plug-in which receives an execution request of a work flow through a Web page may be added.

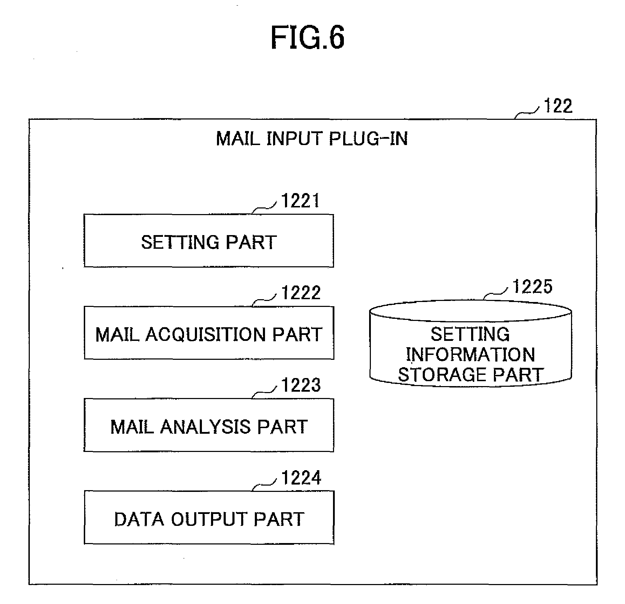

A description will be given of the mail input plug-in in further detail. FIG. 6 is a diagram illustrating a functional configuration of the mail input plug-in 122.

As illustrated in FIG. 6, the mail input plug-in 122 causes the CPU 104 of the distribution management server 10 to function as a setting part 1221, a mail acquisition part 1222, a mail analysis part 1223 and a data output part 1224.

The setting part 1221 receives an input of setting information with respect to the mail input plug-in 122, and stores the setting information in the setting information storage part 1225. The setting information storage part 1225 can be realized by using, for example, the auxiliary storage device 102 or a storage device connected to the distribution management management server 10 through a network.

The mail acquisition part 1222 monitors existence of new arrival mail through communication with the mail server 60, and if a new arrival mail is received by the mail server 60, the mail acquisition part 1222 acquires the new arrival mail from the mail server 60. For example, a communication protocol such as, for example, a post office protocol (POP) or an internet message access protocol (IMAP) may be used when acquiring a new arrival mail. The mail acquisition part 1222 can set a plurality of flow addressed as a target of monitoring.

The mail analysis part 1223 extracts attached data and format data from the electronic mail acquired by the mail acquisition part 1222, and shapes or reformulates the extracted data into the format of the job information. The format data refers to a sender address, destination (To) address, Cc-address, Bcc-address, reception date and time, item name (title), etc. A text may be contained in the format data. The data output part 1224 stores the job information shaped or reformulated by the mail analysis part 1223 in the job queue 15.

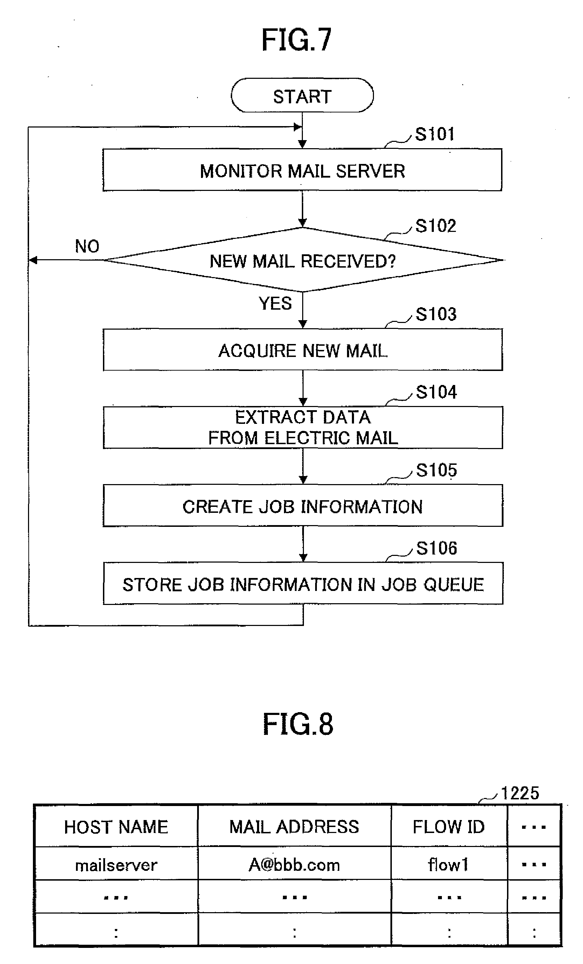

A description will be given below of a process procedure performed by the distribution management server 10. FIG. 7 is a flowchart of a process of receiving process of an execution request of a work flow of electronic mail.

The mail acquisition part 1222 monitors existence of new arrival mail addressed to a flow address through communication with the mail server 60 (S101). The mail server 60 and the flow address, which are set as monitoring targets, can be identified based on, for example, information stored in the setting information storage part 1225.

FIG. 8 is an illustration indicating a configuration of the setting information storage part 1225. As illustrated in FIG. 8, the setting information storage part 1225 stores a host name, mail address and flow ID for each monitoring target. The host name is a name of the mail server 60, which is a target for monitoring. An internet protocol (IP) address or a uniform resource locator (URL) may be set instead of the host name in response to a communication protocol to be used. The mail address is an address set as a flow address. The flow ID is an ID of a work flow to be executed with respect to electronic mail having a destination of the mail address concerned in the mail server 60 associated with the host name concerned. That is, in the present embodiment, the work address is made to correspond to the flow address. In addition, a plurality of records can be registered in the setting information storage part 1225. Accordingly, a plurality of flow addresses can be set, and different flow IDs can be assigned to the flow addresses, respectively. A user can have the distribution management server 10 to execute a desired work flow by sending electronic mail to a flow address corresponding to the desired work flow by using the client terminal 20.

Although the mail address and the flow ID are set as different items, the flow ID may be contained in the mail address.

When a plurality of records are stored in the setting information storage part 1225, the mail acquisition part 1222 monitors, in step S101, a plurality of flow servers 60 or a plurality of flow addresses.

If the mail acquisition part 1222 detects that new arrival mail is received in one of the monitoring targets (Yes of S 102), the mail acquisition part 1222 acquires (downloads) the new arrival mail from the monitoring target (S103). Although a plurality of new arrival mails may be acquired, it is assumed that one new arrival mail is acquired in the following description for the sake of convenience. If a plurality of new arrival mails are acquired, the process described below may be performed for each new arrival mail. Hereinafter, new arrival mail acquired is referred to as "target mail".

Consequently, the mail analysis part 1223 extracts attached data and format data from the target mail (S104). Then, the mail analysis part 1223 shapes or reformulate the extracted data into the form of the job information (S105).

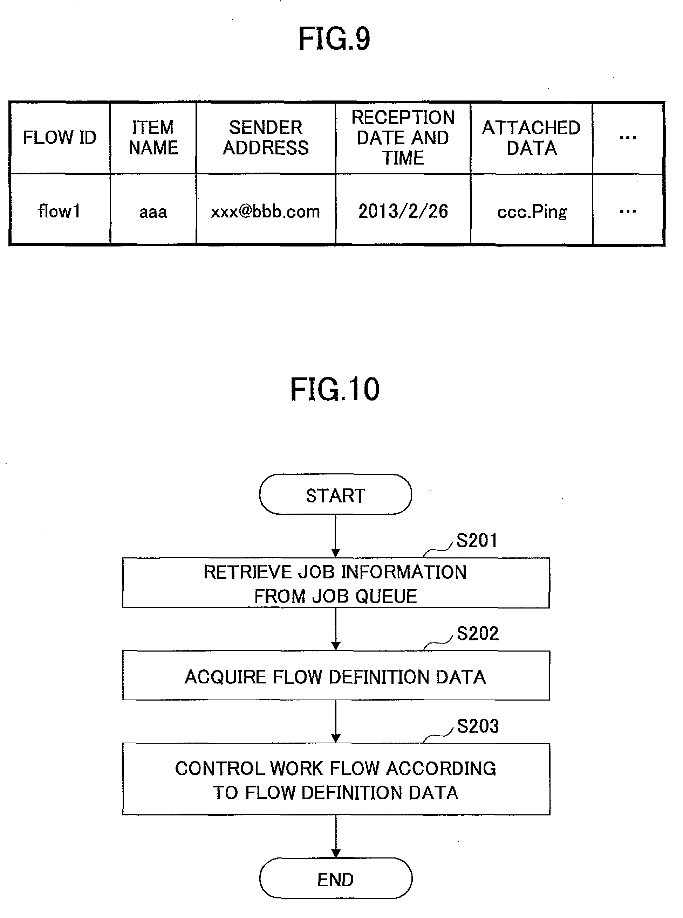

FIG. 9 is an illustration indicating a configuration of the job information. As illustrated in FIG. 9, the job information contains a flow ID, item name, sender address, reception date and time, attached data, etc. The flow ID is an ID corresponding to a destination address of the target data, and can be identified by referring to the setting information storage part 1225. The item name, sender address, reception date and time, etc., are format data extracted from the target data. Other elements of the format data such as a text and the like may be contained in the job information. The attached data is a file name of data (for example, image data) attached to the target mail.

The job information may be stored in an extensible markup language (XML) file, a comma separated values (CVS) file or a file of other forms.

Consequently, the data output part 1224 stores the job information in the job queue 15 (S106).

Step S103 and subsequent steps are performed repeatedly each time new arrival mail having a destination of any flow address is received.

A description will be given below of a control process of a work flow based on the job information registered in the job queue 15.

FIG. 10 is a flowchart of a process procedure of a work flow control process based on the job information.

The flow execution control part 13 periodically refers to, for example, the job queue 15, and if the job information is stored in the job queue 15, the flow execution control part 13 retrieves the job information from the job queue 15 (S201). Then, the flow execution control part 13 acquires flow definition data corresponding to the flow ID contained in the job information from the flow definition storage part 16 (S202).

Then, the flow execution control part 13 controls an execution of a work flow with respect to the attached data contained in the job information based on the acquired flow definition data. Specifically, if an intermediate process is defined in the flow definition data, the process part 14 associated with the intermediate process is caused to perform the intermediate process (S203). Additionally, the flow execution control part 13 causes the process part 14 associated with an output process, which is defined in the flow definition data, to perform the output process defined in the flow definition data.

In each intermediate process or output process, the format data of electronic mail contained in the job information may be used as a parameter of process control. For example, a folder of a destination may be determined based on the sender address. The sender address may be set as a destination of distribution. In such a case, if the electronic mail having a destination of a flow address is transmitted, an operation feel can be provided to a user that an execution result of a work flow corresponding to the flow address is received.

As mentioned above, according to the present embodiment, an execution request of a work flow can be input by electronic mail. Accordingly, for example, data saved in a device, such as a cellular phone, smart phone, tablet-type terminal, personal computer (PC), etc, used by a user can be easily and simply set as input data of a work flow. That is, in a case where the mail input plug-in 122 does not exists, if a user attempts to input data saved in the device into a work flow, the user must perform an operation to save the data in a folder, which the folder input plug-in 123 sets as a monitoring target. Thus, according to the present embodiment, convenience of a work flow can be improved.

Additionally, a user can cause a plurality of work flows to be executed concurrently based on one electronic mail by making the destination of the one electronic address to be a plurality of flow addresses.

An example where the work flow of a target to be executed is identified by a flow address was described above. However, the work flow of a target of execution may be identified based on contents of electronic mail transmitted to the the destination of the flow address. For example, a flow ID may be identified based on a sender address of electronic mail. In such a case, an item of a sender address may be added to the setting information storage part 1225 so that a flow ID id assigned to each sender address. Accordingly, if the items of the host name and mail address are common, a different flow ID can be assigned to each sender address.

Additionally, for example, one or more flow IDs may be described in a predetermined format in an item name or a text of electric mail. The mail analysis part 1223 may extract a flow ID described in electronic mail, and contain the extracted flow ID in the job information. If a plurality of flow IDs are described, a plurality of pieces of job information having mutually different flow IDs may be created. In such a case, the flow address is not necessarily provided for each work flow (each flow ID).

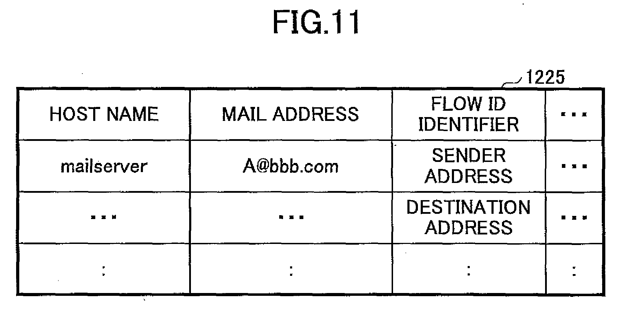

Additionally, the setting information storage part 1225 may have a configuration illustrated in FIG. 11. FIG. 11 is an illustration indicating a configuration of another example of the setting information storage part.

As illustrated in FIG. 11, the setting information storage part 1225 stores a host name, mail address, flow ID, etc, for each target to be monitored. The meanings of the host name and mail address are the same as that of the setting information storage part 1225 illustrated in FIG. 8. The flow ID identifier is an item indicating as to which flow ID is identified based on which structural element from among the structural elements (destination address, sender address, Cc-address, Bcc-address, item name, etc.,) of electronic mail. In FIG. 11, a record at the first line indicates an example where a flow ID is identified based on a sender address. A record at the second line indicates an example where a flow ID is identified based on a destination address. In such a case, correspondence information of the sender address or the destination address and the flow ID may be stored separately in the auxiliary storage device 102. The mail analysis part 1223 determines which structural element of the electronic mail should be used to identify the flow ID based on a value of the flow ID identifier (a value of item of the mail address of the setting information storage part 1225) corresponding to a flow address of the acquired electronic mail. The mail analysis part 1223 identifies the associated flow ID in the correspondence information with respect to the structural elements (sender address or destination address) associated with the determination result as a flow ID of the work file to be executed. For example, if a user desires to make a flow ID to be identified based on the sender address, what is required to the user is to transmit electronic mail to a destination of a flow address of which sender address is a flow ID identifier.

In the present embodiment, the distribution management server 10 configured by one or more computers is a mere example of an information processing system or apparatus. The mail acquisition part 1222 is a mere example of an acquisition part. The mail analysis part 1223 is a mere example of an extraction part. The data output part 1224 is a mere example of an output part.

The present invention can be implemented in any convenient form, for example, using dedicated hardware, or a mixture of dedicated hardware and software. The present invention may be implemented as computer software implemented by one or more networked processing apparatuses. The network can comprise any conventional terrestrial or wireless communications network, such as the Internet. The processing apparatuses can comprise any suitable programmed apparatuses such as a general purpose computer, personal digital assistant (PDA), mobile telephone (such as a WAP or 3G-compliant phone) and so on. Since the present invention can be implemented as software, each and every aspect of the present invention thus encompasses computer software implementable on a programmable device. The computer software can be provided to the programmable device using any conventional carrier medium. The carrier medium can compromise a transient carrier medium such as an electrical, optical, microwave, acoustic or radio frequency signal carrying the computer code. An example of such a transient medium is a TCP/IP signal carrying computer code over an IP network, such as the Internet. The carrier medium can also comprise a storage medium for storing processor readable code such as flexible magnetic disk, hard disk, CD-ROM, magnetic tape device or solid state memory device.

The computer software can be provided to the programmable apparatus using any non-transient recording medium for recording processor readable code, such as a flexible magnetic disk, hard disk, CD-ROM, magnetic tape, solid-state memory, etc.

The hardware platform encompasses any suitable hardware resources including, for example, a central processing unit (CPU), random access memory (RAM), hard disc drive (HDD), etc. The CPU can be configured by any suitable types and numbers of processors. The RAM can be configured by any suitable volatile or non-volatile memory. The HDD can be configured by any suitable non-volatile memory that can record a large amount of data. The hardware resources may further be equipped with an input device, output device or network device in conformity with the device type. The HDD may be provided outside the apparatus as long as it can be accessed. In such an example, the CPU and RAM like a cache memory of CPU can serve as a physical memory or main memory of the apparatus, whereas the HDD can serve as a secondary memory of the apparatus.

All examples and conditional language provided herein are intended for pedagogical purposes of aiding the reader in understanding the invention and the concepts contributed by the inventors to further the art, and are not to be construed as limitations to such specifically recited examples and conditions, nor does the organization of such examples in the specification relate to a showing of the superiority or inferiority of the invention. Although one or more embodiments of the present invention have been described in detail, it should be understood that the various changes, substitutions, and alterations could be made hereto without departing from the spirit and scope of the invention.

## Claims

1. An information processing system that includes one or more computers and executes a process flow that is configured by arbitrarily combining one or more process units, the information processing system **characterized in that**:
an acquisition part acquires electronic mail having a predetermined destination mail address;
an extraction part extracts data contained in said electronic mail; and
an output part outputs the extracted data as a process target of said process flow.

2. The information processing system as claimed in claim 1, wherein said acquisition part acquires electronic mail having a predetermined plurality of destination mail addresses, and said output part outputs data extracted from said electronic mail as a processing target of a process flow corresponding to the destination mail addresses of said electronic mail from among a plurality of said process flows having mutually different combinations of process units.

3. The information processing system as claimed in claim 1, wherein said output part outputs the data extracted from said electronic mail as a processing target of a process flow corresponding to contents of said electronic mail from among a plurality of said process flows having mutually different combinations of process units.

4. An information processing apparatus that includes one or more computers and executes a process flow that is configured by arbitrarily combining one or more process units, the information processing apparatus **characterized in that**:
an acquisition part acquires electronic mail having a predetermined destination mail address;
an extraction part extracts data contained in said electronic mail; and
an output part outputs the extracted data as a processing target of said process flow.

5. An information processing apparatus as claimed in claim 4, wherein said acquisition part acquires electronic mail having a predetermined plurality of destination mail addresses, and said output part outputs data extracted from said electronic mail as a processing target of a process flow corresponding to the destination mail addresses of said electronic mail from among a plurality of said process flows having mutually different combinations of process units.

6. The information processing apparatus as claimed in claim 4, wherein said output part outputs the data extracted from said electronic mail as a processing target of a process flow corresponding to contents of said electronic mail from among a plurality of said process flows having mutually different combinations of process units.

7. An information processing method performed by an information processing system that includes one or more computers and executes a process flow that is configured by arbitrarily combining one or more process units, the information processing method **characterized by**:
acquiring electronic mail having a predetermined destination mail address;
extracting data contained in said electronic mail; and
outputting the extracted data as a processing target of said process flow.

8. The information processing method as claimed in claim 7, wherein said acquiring acquires electronic mail having a predetermined plurality of destination mail addresses, and said outputting outputs data extracted from said electronic mail as a processing target of a process flow corresponding to the destination mail addresses of said electronic mail from among a plurality of said process flows having mutually different combinations of process units.

9. The information processing method as claimed in claim 7, wherein said outputting outputs the data extracted from said electronic mail as a processing target of a process flow corresponding to contents of said electronic mail from among a plurality of said process flows having mutually different combinations of process units.
